# EUROPEAN PATENT APPLICATION

(11) **EP 1 031 479 A2**
(43) Date of publication of application: **30.08.2000**
(21) Application number: 00103858.7
(22) Date of filing: 24.02.2000
(51) Int. Cl.: B60R 25/04, E05B 49/00

(54) **Biometric sensor for motor vehicles**

(30) Priority: 27.02.1999 DE 19908619
(71) Applicant: Delphi Technologies, Inc., Troy, MI 48007 (US)
(72) Inventor: Langenbach, Julia, Dr., 57258 Freudenberg (DE)
(74) Representative: Cohausz & Florack

(57) **Abstract**

The invention relates to a device for engaging an engine or a locking device of a motor vehicle by authorized users, where said device comprises a biometric sensor, by which biometric characteristics of a user can be scanned, where said device comprises a storage unit (104), by which said biometric characteristics of various authorized users can be stored, where said device comprises a discriminating unit (102), by which said scanned biometric characteristics are compared with said stored biometric characteristics and where said discriminating unit initiates a clearing signal, by which said engine is started or doors are opened. To provide such a device, which will be accepted by the users and will improve the security of known systems is achieved by a biometric sensor which is arranged in the vicinity of a starting switch (103) or the door opener (101).

## Description

This invention relates to a device for engaging an engine or a locking device of a motor vehicle by authorized users, where said device comprises a biometric sensor, by which biometric characteristics of a user can be scanned, where said device comprises a storage unit, by which said biometric characteristics of various authorized users can be stored, where said device comprises a discriminating unit, by which said scanned biometric characteristics are compared with said stored biometric characteristics and where said discriminating unit initiates a clearing signal, by which said engine is started or doors are opened.

In known devices for engaging the engine of a motor vehicle the biometric sensor is usually arranged in the dash-board. In most cases, this biometric sensor is a fingerprint sensor, which scans the fingerprint of a user. In such a case, the user has to put his finger on the fingerprint scanner before he can start the vehicle. As a result, the acceptance of such a fingerprint sensor will not be high, because the user has to perform more than one task to start the engine.

It is also known that users have aversions against new technologies, which prevents the distribution of such a technology. Most people will dislike to be scanned by a machine.

A drawback of known systems is that the acceptance for such systems is low and that the security of starting switches is not adequate and furthermore, that there is a remaining risk for malfunction, i.e. if a child pushes the button or an authorized user pushes the button by mistake, for example with his elbow.

According to the above identified problems, it is an objective of the invention, to provide a device for engaging the engine of a motor vehicle with a biometric sensor, which will be accepted by the users and will improve the security of known systems.

The objective of the invention is met by a device, wherein said biometric sensor is arranged in vicinity of a starting switch. Such, the user has not the feeling of being scanned while he uses the starting switch. During the starting process, he has to put his finger inevitable on the starting switch. While the user does that, the fingerprint sensor can scan his fingerprint and passes the result of the fingerprint scan to said discriminating unit. In said discriminating unit, the scanned fingerprint is compared to stored fingerprints. These stored fingerprints are provided by said storing unit, wherein fingerprints of authorized users are stored. If said discriminating unit finds a matching fingerprint among the stored fingerprints, a clearing signal is emitted by that unit. Upon this clearing signal, the engine of the motor vehicle can be started. It is possible to have security mechanism within the discriminating unit such that the motor vehicle will be locked, when the biometric sensor has performed three invalid scans.

A device, wherein the fingerprint sensor is sized just to fit the size of the user's fingertip is proposed. Such it is achieved that the user will not register that a biometric sensor is scanning his fingertips. A small fingerprint sensor can be easily arranged within the starting switch.

By scanning the fingerprints of at least two fingers, the security of the device is increased enormously. Taking into account that today's motor vehicles are very valuable, the security against fraud has to be high. It might be possible for a criminal to copy the fingerprint of one finger of authorized user. But to copy at least two fingerprints of said authorized user is almost impossible.

To reduce the risk of a start of the engine without having the control of the vehicle, the fingerprint sensor is arranged within the steering wheel such that the user's fingerprint can be scanned while he has his hand on the steering wheel. That assures that the user is in control of the motor vehicle, when it is started.

As it is an objective of the invention to improve the acceptance of such a system by the users, a device is proposed, wherein said biometric characteristics of various authorized users can be stored in said storage unit during a training phase, wherein user preferences for each authorized user are stored in said storage unit as well, and wherein said preferences of the current user are send to various units when the user starts the motor vehicle by using the biometric sensor. The preferences can be the adjustment of the mirrors, the seat, the air conditioning or the radio system. Besides the comfort features mentioned above also security features may be stored, e.g. if a specific driver is allowed only to drive at a restricted maximum speed (learner).

To provide a keyless entry system, with the same advantages of security and usability as the starting system described above, a device for engaging a locking device of a motor vehicle by authorized users is proposed, where said device comprises a biometric sensor, by which biometric characteristics of a user can be scanned, where said device comprises a storage unit, by which said biometric characteristics of various authorized users can be stored, where said device comprises a discriminating unit, by which said scanned biometric characteristics are compared with said stored biometric characteristics, and where said discriminating unit initiates a clearing signal, by which doors of said vehicle are locked/unlocked, wherein said device is arranged in the vicinity of a door opener. Such it is possible to provide a keyless entry system with a high security level. It is not possible for an unauthorized user to get into the vehicle, which means that all items within the vehicle are secured against theft. By arranging such a device in the vicinity of the door opener of the vehicle's doors, the user has only to operate the door opener and his fingerprints can be scanned instantly. The user does not even register that his biometric characteristics are being scanned.

With such a device, it is possible that said biometric characteristics of various authorized users are stored in said storage unit during a training phase that user preferences for each authorized user are stored in said storage unit as well, and that the preferences of a current user are send to various units when said current user opens said doors of said vehicle by using said biometric sensor. Such it is possible that for example the seat position, the mirror adjustments, the air conditioning and the radio receiver settings are already adjusted automatically, before the user enters the vehicle.

The invention and the various features thereof may be fully understood from the following description, when read together with the accompanying drawing in which:

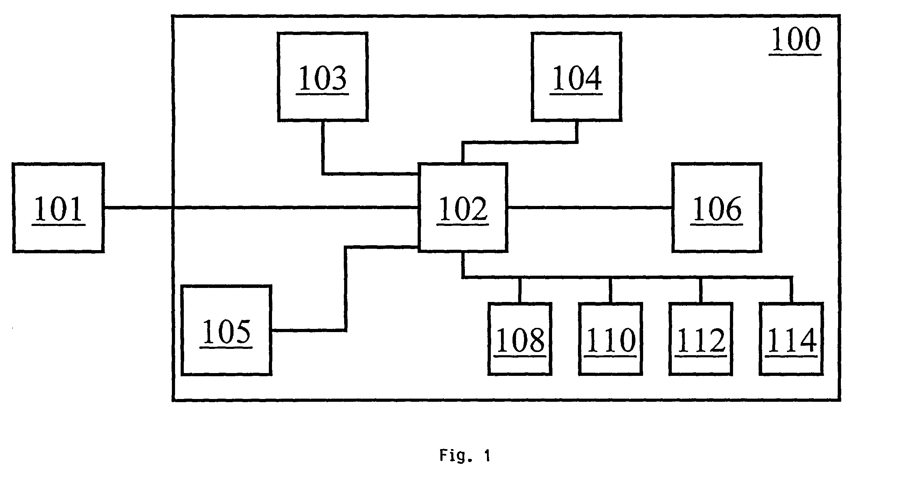

- Fig. 1: shows a block diagram of a device according to the invention.

If a user wants to enter the vehicle 100, he has to put his finger on the door opener 101, within the door opener 101, a fingerprint sensor is arranged. When the user touches the door opener 101, the fingerprint sensor is activated. After the fingerprint is scanned, the fingerprint characteristics are send to a discriminating unit 102. Within the discriminating unit 102, the fingerprint characteristics are compared to fingerprint characteristics that are stored in the storage unit 104. If there is a match between the fingerprint characteristics of the current user and a fingerprint characteristic, which is stored in the storage unit 104, the door opening system 105 is activated by the discriminating unit 102. Upon multiple mismatches between the scanned fingerprint characteristics and the stored characteristics, the engine 106 of the motor vehicle 100 is locked. If that is case, the engine 106 can only be unlocked by special unlocking procedures, which are not described in detail.

Upon a match between the scanned fingerprint characteristics and a stored fingerprint characteristic, the air conditioning 108, the seat position 110, the radio setting 112 and the mirror 114 is adjusted by the discriminating unit 102. To do so, the discriminating unit reads user preferences, which are stored with the fingerprint characteristics in the storing unit 104, from the storing unit 104. To start the engine 106, the user has to push the start button 103. Within the start button 103, again a fingerprint sensor is arranged. That ensures that the engine 106 is not started by mistake, when the start button 103 is pressed by accident.

The whole device offers a high level of security against fraud and provides the user with the highest possible convenience.

## Claims

1. Device for engaging an engine of a motor vehicle by authorized users, where said device comprises a biometric sensor, by which biometric characteristics of a user can be scanned, where said device comprises a storage unit, by which said biometric characteristics of various authorized users can be stored, where said device comprises a discriminating unit, by which said scanned biometric characteristics are compared with said stored biometric characteristics, and where said discriminating unit initiates a clearing signal, by which said engine is started,
wherein said biometric sensor is arranged in vicinity of a starting switch.

2. Device according to claim 1,
wherein said biometric sensor is a fingerprint sensor, by which said user's fingerprint is scanned.

3. Device according to claim 2,
wherein said fingerprint sensor is sized just to fit the size of said user's fingertip.

4. Device according to claim 2,
wherein said biometric sensor scans a fingerprint of at least two fingers.

5. Device according to claim 2,
wherein said fingerprint sensor is arranged in the steering wheel.

6. Device according to claim 1,
wherein said biometric characteristics of various authorized users are stored in said storage unit during a training phase, wherein user preferences for each authorized user are stored in said storage unit as well, and wherein said preferences of a current user are send to various units when said user starts said motor vehicle by using said biometric sensor.

7. Device for engaging a locking device of a motor vehicle by authorized users, where said device comprises a biometric sensor, by which biometric characteristics of a user can be scanned, where said device comprises a storage unit, by which said biometric characteristics of various authorized users can be stored, where said device comprises a discriminating unit, by which said scanned biometric characteristics are compared with said stored biometric characteristics, and where said discriminating unit initiates a clearing signal, by which doors of said vehicle are locked/unlocked, wherein said device is arranged in the vicinity of a door opener.

8. Device according to claim 7,
wherein said biometric characteristics of various authorized users are stored to said storage unit during a training phase, wherein user preferences for each authorized user are stored in said storage unit as well, and wherein said preferences of a current user are send to various units when said user opens said doors of said vehicle by using said biometric sensor.
